# EUROPEAN PATENT APPLICATION

(11) **EP 4 468 073 A1**
(43) Date of publication of application: **27.11.2024**
(21) Application number: 22922373.0
(22) Date of filing: 16.12.2022
(51) Int. Cl.: G02F 1/1335, G02F 1/1337, G02F 1/137, G02B 5/30, B32B 7/023, B60J 3/04, E06B 3/67, G06F 1/16

(54) **OPTICAL STACK, METHOD FOR MANUFACTURING SAME, AND SMART WINDOW COMPRISING SAME**

(30) Priority: 21.01.2022 KR 20220009362
(71) Applicant: Dongwoo Fine-Chem Co., Ltd., Iksan-si, Jeollabuk-do 54631 (KR)
(72) Inventor: AHN, Hong-Jun, Iksan-si, Jeollabuk-do 54631 (KR); KIM, Dong-Hwi, Iksan-si, Jeollabuk-do 54631 (KR); OH, Pyoung-Yun, Iksan-si, Jeollabuk-do 54631 (KR)
(74) Representative: Betten & Resch
(86) International application number: PCT/KR2022/020636
(87) International publication number: WO 2023/140516

(57) **Abstract**

The present invention relates to a transmittance-variable optical stack, a method for manufacturing same, and a smart window comprising same, the optical stack comprising: a first polarizing plate including a first functional layer; a first transparent conductive layer formed on one surface of the first polarizing plate; a second polarizing plate including a second functional layer and opposite to the first polarizing plate; a second transparent conductive layer formed on one surface of the second polarizing plate and opposite to the first transparent conductive layer; and a liquid crystal layer provided between the first transparent conductive layer and the second transparent conductive layer, wherein at least one of the first transparent conductive layer and the second transparent conductive layer is formed to come in direct contact with one of the first polarizing plate and the second polarizing plate, and the first functional layer and the second functional layer have a surface pencil hardness of 3B to 6H.

## Description

### Technical Field

The present disclosure relates to a variable transmittance optical stack, a method for manufacturing the same, and a smart window including the same.

### Background Art

In general, there are many cases in which an external light blocking coating is applied to a window of a means of transportation such as a vehicle. However, a transmittance of a conventional window of a means of transportation is fixed, and a transmittance of the external light blocking coating is also fixed. Therefore, the entire transmittance of the conventional window of the means of transportation is fixed, thereby causing an accident. For example, when the entire transmittance is preset low, there is no problem during day when ambient light is sufficient. However, there is a problem in that it is difficult for a driver or the like to properly check the surroundings of the means of transportation at night when ambient light is insufficient. Alternatively, when the entire transmittance is preset high, there is a problem of causing glare to a driver or the like during day when ambient light is sufficient. Accordingly, a variable transmittance optical stack capable of changing the transmittance of light when a voltage is applied has been developed.

The variable transmittance optical stack is driven by changing the transmittance by driving liquid crystals according to voltage application. The variable transmittance optical stack developed so far is manufactured by forming a conductive layer for driving liquid crystals on a separate or additional substrate, and then coupling the conductive layer with other elements such as a polarizing plate.

For example, Japanese Patent Publication Application No. 2018-010035 discloses a variable transmittance optical stack including a transparent electrode layer formed on a polycarbonate (PC) substrate having a predetermined thickness.

However, when a separate or additional substrate is included to form the conductive layer as described above, as a manufacturing process becomes complicated, manufacturing costs are increased, the thickness of the stack is increased, and the transmittance is changed due to the occurrence of retardation.

Furthermore, when a separate or additional substrate for forming a conductive layer is not simply included to solve the above problem, in the manufacturing process, specifically, in a bonding process of upper and lower plates, there is a problem of cracks occurring in a conductive layer, etc. due to pressure application by spacers and chemical reactions of liquid crystals, alignment films, etc.

Therefore, there is a need to develop a variable transmittance optical stack that can simplify the manufacturing process, have a reduced thickness by not including a separate or additional substrate for forming a conductive layer, and prevent cracks or scratches that occur in the manufacturing process.

### Disclosure

### Technical Problem

The present disclosure is intended to provide a variable transmittance optical stack having a simplified manufactured process without a separate or additional substrate for forming a conductive layer.

Another objective of the present disclosure is to provide a variable transmittance optical stack having a significantly reduced thickness by not including a separate or additional substrate for forming a conductive layer.

Yet another objective of the present disclosure is to provide a variable transmittance optical stack having an improved transmittance thereof in a light transmissive mode by not including a separate or additional substrate for forming a conductive layer.

Still another objective of the present disclosure is to provide a variable transmittance optical stack including a functional layer that can improve surface hardness, thereby minimizing cracks or scratches occurring in the manufacturing process.

Still another objective of the present disclosure is to provide a smart window including the variable transmittance optical stack, and windows and doors for a vehicle or a building to which the same is applied.

However, the problem to be solved by the present disclosure is not limited to the problems mentioned above, and other problems not mentioned will be clearly understood by those skilled in the art from the description below.

### Technical Solution

The present disclosure relates to a variable transmittance optical stack including: a first polarizing plate including a first functional layer; a first transparent conductive layer formed on one surface of the first polarizing plate; a second polarizing plate including a second functional layer and opposite to the first polarizing plate; a second transparent conductive layer formed on one surface of the second polarizing plate and opposite to the first transparent conductive layer; and a liquid crystal layer provided between the first transparent conductive layer and the second transparent conductive layer, wherein at least one of the first transparent conductive layer and the second transparent conductive layer may be formed in direct contact with one of the first polarizing plate and the second polarizing plate, and each of the first and second functional layers may have surface pencil hardness ranging from 3B to 6H.

In a first aspect of the present disclosure, each of the first and second functional layers may have surface pencil hardness ranging from HB to 6H.

In a second aspect of the present disclosure, each of the first and second functional layers may include at least one of a hard coating layer and a low refractive index layer.

In a third aspect of the present disclosure, the low refractive index layer may include one or more types selected from a group consisting of SiO₂, Al₂O₃, MgF₂, CaF₂, and cryolite.

In a fourth aspect of the present disclosure, at least one of the first transparent conductive layer and the second transparent conductive layer may be formed in direct contact with one of the first polarizing plate and the second polarizing plate without a separate or additional substrate between the transparent conductive layer and the polarizing plate.

In a fifth aspect of the present disclosure, at least one of the first transparent conductive layer and the second transparent conductive layer may be formed in direct contact with one of the first polarizing plate and the second polarizing plate with a highly adhesive layer between the transparent conductive layer and the polarizing plate.

In a sixth aspect of the present disclosure, at least one of the first transparent conductive layer and the second transparent conductive layer may include one or more types selected from a group consisting of a transparent conductive oxide, metal, carbonaceous material, conductive polymer, conductive ink, and nanowires.

In a seventh aspect of the present disclosure, at least one of the first polarizing plate and the second polarizing plate may further include one or more types selected from a group consisting of a protective layer, a retardation matching layer, and a refractive index matching layer.

In an eighth aspect of the present disclosure, at least one of the first polarizing plate and the second polarizing plate may have a thickness ranging from 30 to 200µm.

In a ninth aspect of the present disclosure, the liquid crystal layer may include one or more types of spacers selected from a group consisting of a ball spacer and a column spacer.

In a tenth aspect of the present disclosure, the spacer may have a diameter ranging from 1 to 10µm.

In an eleventh aspect of the present disclosure, an occupancy area of the spacer in the liquid crystal layer may range from 0.01% to 10% of the area of the liquid crystal layer.

In a twelfth aspect of the present disclosure, the variable transmittance optical stack may further include: one or more types selected from a group consisting of an alignment film, a pressure-sensitive adhesive/adhesive layer, and an ultraviolet ray absorption layer.

Furthermore, the present disclosure relates to a method for manufacturing the variable transmittance optical stack.

Furthermore, the present disclosure relates to a smart window including the variable transmittance optical stack.

Furthermore, the present disclosure relates to a transportation means including the smart window.

Furthermore, the present disclosure relates to a vehicle in which the smart window may be applied to at least one of a front window, a rear window, a side window, a sunroof window, and an inner partition thereof.

Furthermore, the present disclosure relates to a wearable device including the smart window.

Furthermore, the present disclosure relates to windows and doors for a building, the windows and doors including the smart window.

### Advantageous Effects

Furthermore, the variable transmittance optical stack according to the present disclosure is formed without the process of forming a conductive layer on a substrate for forming the conventional optical stack and bonding it to other members, etc., so that the manufacturing process thereof can be simplified compared to the conventional optical stack.

The variable transmittance optical stack according to the present disclosure is formed without a separate or additional substrate for forming a conductive layer as the conductive layer is directly formed on one surface of the polarizing plate, so that the thickness thereof can be significantly reduced compared to the thickness of the conventional optical stack.

The variable transmittance optical stack according to the present disclosure is formed without a separate or additional substrate for forming a conductive layer as the conductive layer is directly formed on one surface of the polarizing plate, so that a transmittance in the light transmissive mode can be improved compared to the conventional optical stack.

Furthermore, according to the present disclosure, the variable transmittance optical stack includes a functional layer that can improve the surface hardness so that cracks or scratches occurring in the manufacturing process can be minimized compared to a conventional optical stack.

### Description of Drawings

FIG. 1 is a view showing a stack structure of a variable transmittance optical stack according to an embodiment of the present disclosure.
FIGS. 2 to 4 are views showing a stack structure of a smart window according to one or a plurality of embodiments of the present disclosure.

### Best Mode

The present disclosure relates to a variable transmittance optical stack. The variable transmittance optical stack has a conductive layer for driving liquid crystals formed directly on one surface of a polarizing plate, thereby having a reduced thickness of the stack and an improved transmittance in a light transmissive mode due to exclusion of a separate or additional substrate for forming the conductive layer, the variable transmittance optical stack having a functional layer that can improve surface hardness, thereby minimizing cracks or scratches occurring in a manufacturing process.

More specifically, the present disclosure relates to a variable transmittance optical stack including: a first polarizing plate including a first functional layer; a first transparent conductive layer formed on one surface of the first polarizing plate; a second polarizing plate including a second functional layer and opposite to the first polarizing plate; a second transparent conductive layer formed on one surface of the second polarizing plate and opposite to the first transparent conductive layer; and a liquid crystal layer provided between the first transparent conductive layer and the second transparent conductive layer. At least one of the first transparent conductive layer and the second transparent conductive layer is formed in direct contact with one of the first polarizing plate and the second polarizing plate, and the first functional layer and the second functional layer have surface pencil hardness ranging from 3B to 6H.

The variable transmittance optical stack of the present disclosure is particularly suitable for technical fields where light transmittance can be changed in response to application of voltage and, for example, may be used for a smart window, etc.

The smart window is an optical structure controlling the amount of light or heat passing through the window by changing light transmittance in response to an electrical signal. In other words, the smart window is provided to be changed into a transparent, opaque, or translucent state by voltage and is called variable transmittance glass, lighting control glass, or smart glass.

The smart window may be used as partitions for partitioning an internal space of vehicles and buildings or for protecting privacy, or as skylights arranged in openings of buildings. Furthermore, the smart window may be used as highway signs, noticeboards, scoreboards, clocks or advertising screens and may be used to replace windows of a means of transportation, such as cars, buses, aircrafts, ships, or trains, or glass of a means of transportation such as sunroof windows.

The variable transmittance optical stack of the present disclosure may also be used for the smart window of the various technical fields mentioned above. However, since the conductive layer is directly formed on the polarizing plate, there is no need to include a separate or additional substrate for forming the conductive layer, and the thickness of the stack is thin and it is advantageous in the flexuosity, so the optical stack of the present disclosure may be used to be particularly suitable for the smart window of a vehicle or a building. According to one or a plurality of embodiments, the smart window to which the variable transmittance optical stack of the present disclosure is applied may be used for front windows, rear windows, side windows, and sunroof windows of a vehicle, or windows and doors for a building, and the smart window may be used to not only an external light blocking use, but also an internal space partitioning use or a privacy protection use such as an inner partition for a vehicle or a building, and may be used in wearable devices such as helmets, glasses, or watches.

Hereinbelow, embodiments of the present disclosure will be described in detail with reference to drawings. However, the following drawings accompanying this specification illustrate preferred embodiments of the present disclosure, and serve to further understand the technical idea of the present disclosure with the contents of the above-described invention. Therefore, the present disclosure should not be construed as being limited to matters described in the drawings.

Terms used in this specification are selected to describe embodiments and thus do not limit the present disclosure. Terms used in this specification are selected to describe embodiments and thus do not limit the present disclosure. For example, "polarizing plate" used in the specification may mean at least one of a first polarizing plate and a second polarizing plate, "transparent conductive layer" may mean at least one of a first transparent conductive layer and a second transparent conductive layer, and "functional layer" may mean at least one of a first functional layer and a second functional layer.

As used herein, terms "comprise" and/or "comprising" do not mean exclusion of the presence or absence of one or more components, steps, movements and/or elements other than a component, a step, movement, and/or an element mentioned above. The same reference numerals are used throughout the specification to designate the same or similar elements.

Spatially relative terms "below", "lower surface", "lower portion", "above", "upper surface", "upper portion" may be used to easily describe the correlation between "one element or components" and "another element or other components", as shown in drawings. The spatially relative terms should be understood as terms including different directions of an element when being used or operated in addition to a direction shown in the drawings. For example, when an element shown in the drawings is turned over, the element described as being "below" or "lower" concerning another element may be placed "on" the another element. Accordingly, the exemplary term "below" may include both downward and upward directions. An element may be aligned in a different direction, and accordingly, the spatially relative terms may be interpreted according to alignment.

The "planar direction" used in this specification may be interpreted as a direction perpendicular to a polarizing plate and/or a transparent conductive layer, that is, a direction viewed from the user's view side.

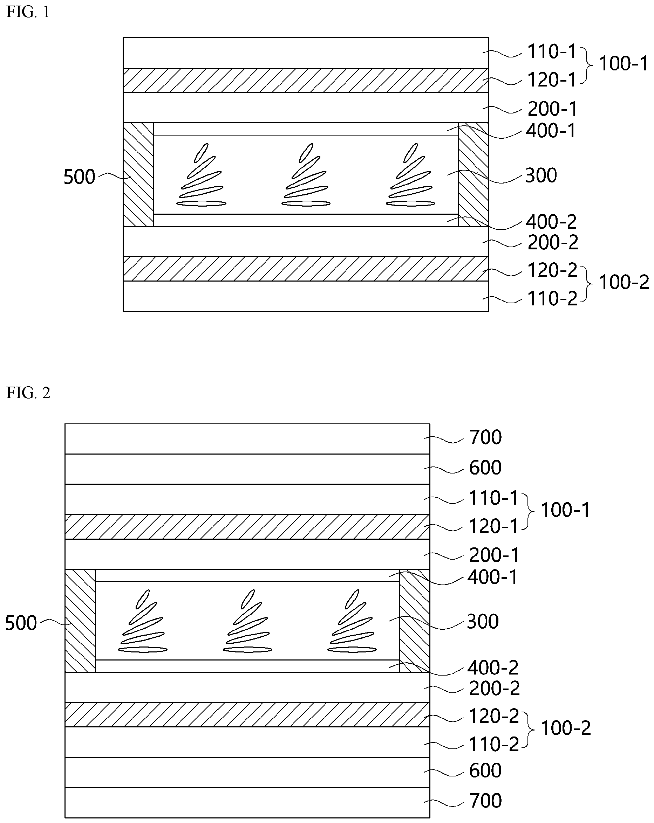

FIG. 1 is a view showing a stack structure of a variable transmittance optical stack according to an embodiment of the present disclosure. FIGS. 2 to 4 are views showing a stack structure of a smart window according to one or a plurality of embodiments of the present disclosure.

Referring to FIG. 1, the variable transmittance optical stack according to the embodiment of the present disclosure includes a first polarizing plate 100-1, a second polarizing plate 100-2, a first transparent conductive layer 200-1, a second transparent conductive layer 200-2, and a liquid crystal layer 300.

The polarizing plate 100 includes a polarizer 110 and one or more functional layers 120 for improving surface hardness of the polarizing plate. According to one or a plurality of embodiments, the polarizing plate 100 may include a protective layer, a retardation matching layer, and a refractive index matching layer.

The polarizer 110 may use a polarizer currently developed or to be developed, and, for example, may use a stretched polarizer, a coated polarizer, etc.

According to an embodiment, the stretched polarizer may contain a stretched polyvinyl alcohol (PVA)-based resin. The PVA-based resin may be PVA-based resin obtained by saponifying polyvinyl acetate resin. In addition to polyvinyl acetate that is homopolymer of vinyl acetate, vinyl acetate and a copolymer with other monomers that can be copolymerized with vinyl acetate may be used as the polyvinyl acetate-based resin. As the other monomers, unsaturated carboxylic acid-based monomers, unsaturated sulfonic acid-based monomers, olefin-based monomers, vinyl ether-based monomers, acrylamide having ammonium groups-based monomers, and the like may be used. Furthermore, the PVA-based resin includes a denatured resin, and for example, may be polyvinyl formal or polyvinyl acetal denatured into aldehyde.

According to an embodiment, the coated polarizer may be formed of a liquid crystal coating composition. At this point, the liquid crystal coating composition may include reactive liquid crystal compounds, dichroic dyes, etc.

The reactive liquid crystal compound may mean a compound, for example, including a mesogen frame, etc., and also including one or more polymerizable functional groups. The reactive liquid crystal compound may be variously known by the name of reactive mesogen (RM). The reactive liquid crystal compounds may constitute a cured film with a polymer network formed while being polymerized by light or heat and maintaining liquid crystal arrangement.

The reactive liquid crystal compounds may be a mono-functional liquid crystal compound or a multi-functional liquid crystal compound. The mono-functional liquid crystal compound is a compound having 1 polymerizable functional group, and a multi-functional liquid crystal compound may mean a compound having two or more polymerizable functional groups.

The dichroic dyes are substances contained in the liquid crystal coating composition to impart the polarization characteristic and have properties in which absorbance in a direction of the long axis of a molecule and absorbance in a direction of the short axis are different. The dichroic dyes may be dichroic dyes currently developed or to be developed and may contain one or more types of dyes selected from a group consisting of azo dyes, anthraquinone dyes, perylene dyes, merocyanine dyes, azomethine dyes, phthaloperylene dyes, indigo dyes, dioxazine dyes, polythiophene dyes, and phenoxazine dyes.

The liquid crystal coating composition may contain a solvent capable of dissolving the reactive liquid crystal compound and the dichroic dye. For example, propylene glycol monomethyl ether acetate (PGMEA), methyl ethyl ketone (MEK), xylene, chloroform, and the like may be used. Furthermore, the liquid crystal coating composition may contain leveling agents, a polymerization initiator, etc. within a range that does not deteriorate the polarization characteristics of a coating film.

The functional layer 120 is provided to improve the hardness of the polarizing plate 100. The functional layer 120 is not particularly limited as long as it can improve the hardness of the polarizing plate 100 and, for example, may include a hard coating layer, a low refractive index layer, and/or the like.

The hard coating layer may use a hard coating layer currently developed or to be developed. For example, the hard coating layer may be formed from compositions for forming a hard coating layer, the composition including acrylate-based or epoxy-based compounds, inorganic fine particles, and/or photoinitiators, etc. Acrylate-based compounds may include monomers or oligomers including (meth)acrylate groups, and the term used in this specification, "(meth)acryl-" is used to be referred to as "methacryl-", "acryl-", or both. As non-restricted examples of the acrylic compound, there may be neopentyl glycol diacrylate, 1,6-hexanediol(meth)acrylate, polypropyleneglycol di (meth)acryl ate, triethyleneglycoldi(meth)acrylate, dipropyleneglycoldi(meth)acrylate, polyethyleneglycoldi(meth)acrylate, polypropyleneglycoldi(meth)acrylate, trimethylolpropanetri(meth)acrylate, trimethylolethanetri(meth)acrylate, 1,2,4-cyclohexanetetra(meth)acrylate, pentaglycerolthri(meth)acrylate, pentaerythritoltetra(meth)acrylate, pentaerythritoltri (meth)acryl ate, dipentaerythritoltri (meth)acryl ate, dipentaerythritolpenta(meth)acrylate, dipentaerythritoltetra(meth)acrylate, dipentaerythritolhexa(meth)acrylate, tripentaerythritoltri(meth)acrylate, tripentaerythritolhexatri(meth)acrylate, bis(2-hydroxyethyl)isocyanuratedi(meth)acrylate, hydroxyethyl(meth)acrylate, hydroxypropyl(meth)acrylate, hydroxybutyl(meth)acrylate, isooctyl(meth)acrylate, i so-dexil (meth)acryl ate, stearyl (meth)acrylate, tetrahydrofurfuryl(meth)acrylate, phenoxyethyl(meth)acrylate, or isoboneol(meth)acrylate. The above-mentioned acrylate-based compounds may be used alone or in combination with two or more. The above-mentioned acrylate-based compounds may include epoxy(meth)acrylate compounds and/or urethane(meth)acrylate compounds. Furthermore, the epoxy-based compounds may include monomers or oligomers including at least one epoxy group in a molecule. The epoxy group may be a substitution epoxy group. Carbon atoms of a substitution loop included in the epoxy group may be 3 to 7. For example, the epoxy group may be a substitution epoxy group (cyclohexylepoxy) including a cyclohexane loop. The substitution loop may have a substituent. For example, the substitution loop may include an alkyl substituent of 1 to 20 carbon atoms. When carbon atoms of the alkyl substituent exceed 20, it may be disadvantageous in terms of curing speed. The alkyl substituent includes a linear or branched type, and the branched type alkyl substituent may have 3 carbon atoms.

According to the embodiment of the present disclosure, the compositions for forming the hard coating layer include inorganic fine particles. According to the embodiment of the present disclosure, the inorganic fine particles may be inorganic fine particles with nanoscale particle size, e.g., nano fine particles with a particle size of approximately 100 nm or less, 10 to 100 nm, or 10 to 50 nm. Furthermore, the inorganic fine particles may be, for example, silica fine particles, aluminum oxide particles, titanium oxide particles, zinc oxide particles, or the like. The hardness of the hard coating layer can be improved by adding the inorganic fine particles. According to the embodiment of the present disclosure, the inorganic fine particles may be included as approximately 10 to 60 parts by weight or 20 to 50 parts by weight to 100 parts by weight of the compositions for forming the hard coating layer. By including the inorganic fine particles as the above-described range, the effect of improving the hardness of the hard coating layer due to addition of the inorganic fine particles can be achieved within the range that does not deteriorate the physical properties of the compositions for forming the hard coating layer.

According to the embodiment of the present disclosure, the compositions for forming the hard coating layer include photoinitiators. According to an embodiment of the present disclosure, the optical initiator may be 1-hydroxy-cyclohexyl-phenyl ketone, 2-hydroxy-2-methyl-1-phenyl-1-propanone, 2-hydroxy-1-[4-(2-hydroxyethoxy)phenyl]-2-methyl-1-propanone, methylbenzoylformate, α,α-dimethoxy-α-phenylacetophenone, 2-benzoyl-2-(dimethylamino)-1-[4-(4-morpholineyl)phenyl]-1-butanone, 2-methyl-1-[4-(methylthio)phenyl]-2-(4-morpholineyl)-1-propanone diphenyl(2,4,6-trimethylbenzoyl)-phosphineoxide, or bis(2,4,6-trimethylbenzoyl)-phenylphosphineoxide, etc., but is not limited thereto. Furthermore, currently available products of the photoinitiators may include Irgacure 184, Irgacure 500, Irgacure 651, Irgacure 369, Irgacure 907, Darocur 1173, Darocur MBF, Irgacure 819, Darocur TPO, Irgacure 907, Esacure KIP 100F, etc. Each photoinitiator may be used alone or two or more types may be mixed.

According to the embodiment of the present disclosure, the photoinitiators may be included as approximately 0.5 to 10 parts by weight or 1 to 5 parts by weight to 100 parts by weigh of the compositions for forming the hard coating layer. When the photoinitiators are within the above range, sufficient cross-linking photopolymerization can be achieved without deteriorating physical properties of the hard coating film.

Meanwhile, in addition to the above-described components, the compositions for forming the hard coating layer may include additional additives commonly used in the technical field to which the present disclosure belongs, such as a surfactant, a yellowing inhibitor, a leveling agent, an antifouling agent, etc. Furthermore, the content thereof may be variously adjusted within a range that does not deteriorate the physical properties of the compositions for forming the hard coating layer according to the present disclosure, and is not particularly limited

The low refractive index layer may be provided to also improve the hardness of the polarizing plate within a range that does not impair the objectives of the present disclosure. The low refractive index layer, for example, may include one or more of low refractive index agents selected from a group consisting of SiO₂, Al₂O₃, MgF₂, CaF, cryloite, etc., and in some embodiments, may include compounds or resins used in the hard coating layer. The hard coating layer and the low refractive index layer may be used alone respectively, and in some embodiments, may be used as a multiple-layered structure.

As shown in FIG. 1, the functional layer 120 may be formed in direct contact with one surface of the polarizer 110, but is not limited thereto. For example, when the polarizing plate includes a retardation matching layer or a refractive index matching layer, the polarizing plate is formed on one surface of the retardation matching layer or the refractive index matching layer. Therefore, the functional layer, the retardation matching layer or the refractive index matching layer, and the polarizer may be stacked in order.

The functional layer 120 is preferably formed on a side toward a liquid crystal layer 300 of the polarizer 110, i.e., on an inner side of the polarizer 110. For example, a first functional layer 120-1 and a second functional layer 120-2 may be provided on an inner side of a first polarizer 110-1 and the second polarizer 110-2 and be arranged to be opposite to each other. In this case, the functional layer may ensure the hardness to the polarizing plate at a level suitable for forming members such as the transparent conductive layer, etc. Therefore, there is the advantage of minimizing cracks or scratches occurring in the manufacturing or treatment process of the optical stack.

The functional layer 120 may preferably have the surface pencil hardness ranging from 3B to 6H, more preferably, from HB to 6H. The surface pencil hardness may be obtained by measuring the pencil hardness of the functional layer by applying a load of 500g by using a pencil hardness tester (pencil hardness tester, Korea Sukbo Scientific Co.). The pencil is a product of Mitsubishi, tests are conducted 5 times per one type of pencil hardness, thermal treatment is performed for 10 minutes at 100°C, and the surface pencil hardness is determined whether scratches are visible with the naked eye. When the surface pencil hardness of the functional layer satisfies the above-described range, the functional layer may have not only excellent abrasion resistance but also bending resistance and durability of the optical stack can be further improved.

According to one or a plurality of embodiments, the thickness of the first functional layer 120-1 and the thickness of the second functional layer 120-2 may range from 1 to 30µm, more preferably, from 2 to 20µm. The thickness may be a thickness after drying. When the thickness of the first functional layer 120-1 and the thickness of the second functional layer 120-2 satisfy the above range, the hardness thereof may be excellent, thinness is possible, and the bending resistance or the durability may be improved.

The protective layer may be provided to preserve the polarization characteristic of the polarizer from a post-processing and external environment and be implemented into a form such as a protective film, etc.

The protective layer may be formed in direct contact with one surface or both surfaces of the polarizer, but is not limited thereto. For example, the protective layer may be used in a multiple-layered structure in which one or more protective layers are successively stacked and may be formed in direct contact with other members such as a retardation matching layer.

According to one or a plurality of embodiments, the protective layer may include one or more types selected from a group consisting of polyethylene terephthalate (PET), polyethylene isophthalate (PEI), polyethylene naphthalate (PEN), polybutylene terephthalate (PBT), diacetyl cellulose, triacetyl cellulose (TAC), polycarbonate (PC), polyethylene (PE), polypropylene (PP), polymethyl acrylate (PMA), polymethyl methacrylate (PMMA), polyethyl acrylate (PEA), polyethyl methacrylate (PEMA), and cyclic olefin polymer (COP).

The retardation matching layer may be provided to complement the optical characteristics of the optical stack and may be implemented into a form of a retardation film, etc., and a retardation film, etc. currently developed or to be developed may be used therefor. For example, a quarter-wave plate (1/4 wave plate), a half-wave plate (1/2 wave plate), etc. may be used to delay the phase of light and may be used alone or in combination.

The retardation matching layer may be formed in direct contact with one surface of the polarizer, but is not limited thereto. For example, the retardation matching layer may be formed in direct contact with one surface of the protective layer and formed in direct contact with one surface of the refractive index matching layer.

The retardation matching layer 130 may be a polymer stretched film or a liquid crystal polymerized film, formed by stretching a polymer film that can impart optical anisotropy by stretching in an appropriate manner.

According to an embodiment, the polymer stretched film may use a polymer layer containing polyolefin such as polyethylene (PE), polypropylene (PP), etc., cyclo olefin polymer (COP) such as polynorbornene, etc., polyester such as polyvinyl chloride (PVC), polyacrylonitrile (PAN), polysulfone (PSU), acryl resin, polycarbonate (PC), polyethylene terephthalate (PET), etc.; and/or cellulose ester polymer such as polyacrylate, polyvinyl alcohol (PVA), triacetyl cellulose (TAC), etc., or a copolymer of two or more monomers among monomers that can form the polymers.

A method for obtaining the polymer stretched film is not particularly limited and, for example, may be obtained by forming the polymer material into a film shape and then stretching the material. The molding method for the film shape is not particularly limited, and the polymer stretched film may be formed in the known methods such as injection molding, sheet molding, blow molding, injection blow molding, inflation molding, extrusion molding, foaming molding, cast molding, etc., and may be formed in a secondary processing molding method such as pressure molding, vacuum molding, etc. Among them, extrusion molding and cast molding may be preferably used. At this point, for example, an unstretched film may be extruded by using an extruder to which a T-die, a circular die, etc., may be mounted. When a molded product is obtained in extrusion molding, a material made by melt-kneading various resin components, additives, etc., in advance, may be used and the molded product may be formed by melt-kneading during extrusion molding. Furthermore, various resin components are dissolved by using a common solvent, for example, a solvent such as chloroform, 2 methylene chloride, etc., and then are solidified in a cast dry manner, and accordingly, the non-stretched film may be cast-molded.

The polymer stretched film may be provided by performing uniaxial stretching with respect to the molded film in the mechanical direction (MD, longitudinal or length direction), and by performing uniaxial stretching in the direction (TD, transverse direction or width direction) perpendicular to the MD, and furthermore, the molded film is stretched in a sequential biaxial stretching method of roll stretching and tenter stretching, a simultaneous biaxial stretching method of tenter stretching, a biaxial stretching method of tubular stretching, etc., so that a biaxial stretched film may be manufactured.

The liquid crystal polymerized film may contain a reactive liquid crystal compound in a polymerized state. The description of the reactive liquid crystal compound of the coated polarizer described above may be equally applied thereto.

In one or a plurality of embodiments, when the retardation matching layer 130 is a polymer stretched film, the thickness of the retardation matching layer may be 10µm to 100µm, and when the retardation matching layer 130 is a liquid crystal polymerized film, the thickness thereof may be 0.1µm to 5µm.

The refractive index-matching layer is provided to compensate for the refractive index difference of the optical stack by the transparent conductive layer 200, and may serve to improve the visible characteristic by reducing the difference of the refractive index. Furthermore, the refractive index-matching layer may be provided to correct a color based on the transparent conductive layer 200. Meanwhile, when the transparent conductive layer has a pattern, the refractive index-matching layer may correct the transmittance difference between a region with the pattern and a non-pattern region without the pattern.

Specifically, the transparent conductive layer 200 is stacked close to other members having a refractive index different therefrom (for example, the polarizer 110, etc.), and due to the difference of the refractive index between the transparent conductive layer and another layer close thereto, the difference of optical transmittance may be caused. Specifically, when the pattern is formed on the transparent conductive layer, there may be a problem in that the pattern region and the non-pattern region are visually distinguished from each other. Therefore, the refractive index-matching layer is included to compensate for a refractive index, thereby reducing the difference with the optical transmittance of the optical stack. Specifically, when the pattern is formed on the transparent conductive layer, the pattern region and the non-pattern region should be provided so as not to be visually distinguished.

According to the embodiment, the refractive index of the refractive index-matching layer may be appropriately selected according to a material of another adjacent member and may be preferably between 1.4 and 2.6, more preferably may be between 1.4 and 2.4. In this case, it is possible to prevent optical loss due to a sharp difference in the refractive index between another member such as the polarizer 110 and the transparent conductive layer 200.

The refractive index-matching layer is not particularly limited as long as it can prevent the sharply refractive difference between other members, such as the polarizer, and the transparent conductive layer 200, and may use a compound used in the formation of a refractive index-matching layer currently developed or to be developed. For example, the refractive index-matching layer 150 may be formed from refractive index-matching layer formation composition containing polymerizable isocyanate compound.

According to the embodiment, the polarizing plate 100 may include other configuration to assist or strengthen the characteristics of the polarizer in addition to the above-mentioned components and, for example, may include an overcoat layer, etc. to further improve the mechanical durability.

According to one or a plurality of embodiments, the polarizing plate 100 may have a thickness ranging from 30 to 200µm, and preferably, a thickness ranging from 30 to 170µm, and more particularly, a thickness ranging from 50 to 150µm. In this case, while the polarizing plate 100 maintains the optical characteristic, the optical stack having a thin thickness can be manufactured.

The transparent conductive layer 200 is provided to drive the liquid crystal layer 300, and may be formed by directly contacting with the polarizing plate 100. For example, as shown in FIG. 1, the first transparent conductive layer 200-1 and the second transparent conductive layer 200-2 may be respectively formed by directly contacting with the first polarizing plate 100-1 and the second polarizing plate 100-2.

Conventionally, an optical stack used to manufacture a smart window, etc. is manufactured by forming a conductive layer for driving a liquid crystal on one surface of a substrate and bonding a second surface of the substrate to a polarizing plate. However, according to the present disclosure, the variable transmittance optical stack has the conductive layer directly formed on one surface of the polarizing plate without a separate or additional substrate for forming the conductive layer, and thus is characterized to improve a transmittance in a light transmissive mode and the curvature characteristic while reducing the entire thickness of the stack.

According to the embodiment, the transparent conductive layer 200 may be formed by being directly deposited on one surface of the polarizing plate 100. At this point, in order to improve the adhesion between the transparent conductive layer 200 and the polarizing plate 100, the transparent conductive layer 200 may be formed such that pre-processing such as a corona processing or a plasma processing is performed on one surface of each polarizing plate 100 and then the transparent conductive layer 200 is brought into direct contact with the surface of each polarizing plate 100 to which the pre-processing is performed. The pre-processing is not limited to the corona processing or the plasma processing, and may be a pre-processing method currently developed or to be developed without harming the purpose of the present disclosure.

According to another embodiment of the present disclosure, in order to improve the adhesion between the transparent conductive layer 200 and the polarizing plate 100, the transparent conductive layer 200 may be formed by directly contacting with each polarizing plate with the highly adhesive layer (not shown) located therebetween, the highly adhesive layer being provided on one surface of each polarizing plate 100.

The transparent conductive layer 200 is preferably have the transmittance with respect to visible light of 50% or more, and for example, may include one or more types selected from a group consisting of transparent conductive oxide, metal, a carbonaceous material, conductive polymer, conductive ink, and nanowires, but the present disclosure is not limited thereto, and a material of a transparent conductive layer currently developed or to be developed later may be used.

According to one or a plurality of embodiments, the transparent conductive oxide may include one or more types selected from a group consisting of indium tin oxide (ITO), indium zinc oxide (IZO), indium zinc tin oxide (IZTO), aluminum zinc oxide (AZO), gallium zinc oxide (GZO), florin tin oxide (FTO), zinc oxide (ZnO), etc. Furthermore, the metal may include one or more types selected from a group consisting of aurum (Au), argentum (Ag), cuprum (Cu), aluminum (Al), platinum (Pt), palladium (Pd), chromium (Cr), titanium (Ti), tungsten (W), niobium (Nb), tantalum (Ta), vanadium (V), iron (Fe), manganese (Mn), cobalt (Co), nickel (Ni), zinc (Zn), alloy containing at least one of them, etc., and for example, may include argentum - palladium - cuprum (APC) alloy or cuprum - calcium (CuCa) alloy. The carbonaceous matter may include one or more types selected from a group consisting of carbon nanotube (CNT), graphene, etc., and the conductive polymer may include one or more types selected from a group consisting of polypyrrole, polythiophene, polyacetylene, PEDOT, polyaniline, etc. The conductive ink may be a mixture of metal powder and curable polymer binder, and the nanowires may be for example silver nanowires (AgNW).

Furthermore, the transparent conductive layer 200 may be formed by combining the above-described substances in a structure of two or more layers. For example, in order to reduce a reflectance of incident light and increase transmittance, the transparent conductive layer may be formed in a structure of two layers including a metal layer and a transparent conductive oxide.

The transparent conductive layer 200 may be formed in a method commonly used in the art and, for example, may be formed using a coating process such as a spin coating method, a roller coating method, a bar coating method, a dip coating method, Gravure coating method, a curtain coating method, a dye coating method, a spray coating method, a doctor coating method, a kneader coating method, etc.; a printing process such as a screen printing method, a spray printing method, an inkjet printing method, a letterpress method, an intaglio printing method, a lithography method, etc.; and a deposition process such as chemical vapor deposition (CVD), physical vapor deposition (PVD), plasma enhanced chemical vapor deposition (PECVD), etc.

The liquid crystal layer 300 may adjust transmittance of light incident in one or a plurality of directions according to electric fields to change a driving mode of the optical stack.

The liquid crystal layer 300 may include liquid crystal compounds. For example, in an optical control region, the liquid crystal layer 300 may be located in a space provided by a sealant 500 and a spacer (not shown) that are provided between a first polarizing plate 100-1 and a second polarizing plate 100-2.

The liquid crystal compounds are operated in response to electric fields and is not particularly limited as long as it can control transmittance of light, and liquid crystal compounds currently developed or to be developed later may be used and, for example, the description of reactive liquid crystal compound of the above-mentioned polarizer may be equally applied thereto.

A liquid crystal operation method of the liquid crystal layer 300 is not particularly limited. For example, as shown in FIG. 1, the liquid crystal layer 300 may be operated by a twisted nematic (TN) mode, and also by a super twisted nematic (STN) mode, a vertical alignment (VA) mode, etc.

The sealant 500 may contain curable resins as base resins. As the base resins, UV curable resins or heat curable resins that are known to be usable for sealants in the art may be used. The ultraviolet curable resins may be polymers of UV curable monomers. The heat-curable resins may be polymers of heat-curable monomers.

As the base resins of the sealant 500, for example, acrylate-based resins, epoxy-based resins, urethane-based resins, phenol-based resins, or compounds of these resins may be used. According to an embodiment, the base resins may be acrylate-based resins, and the acrylate-based resins may be polymers of acrylic monomers. For example, the acrylic monomers may be multifunctional acrylate. According to another embodiment, the sealant may contain monomer substances in addition to the base resins. For example, the monomer substances may be monofunctional acrylate. In the specification, the monofunctional acrylate may mean compounds having one acryl group, and the multifunctional acrylate may mean compounds having two or more acryl groups. The curable resins may be cured by UV irradiation and/or heating. The UV irradiation condition or heat condition may be performed appropriately within the scope that does not damage the objective of the present disclosure. In case of need, the sealant may contain an initiator, for example, an optical initiator or a heat initiator.

The sealant 500 may be formed in a method commonly used in the art. For example, the sealant 500 may be formed by drawing a sealant at an outer portion of the liquid crystal layer (i.e., inactivate region) with a dispenser having a nozzle.

The spacer may include at least one of a ball spacer and a column spacer, and specifically, may preferably be a ball spacer. The ball spacer may include one or more ball spacers and preferably has a diameter ranging from 1 to 10µm. Furthermore, when viewed in the planar direction, a region where the ball spacer is occupied in the liquid crystal layer 300 is preferably 0.01 to 10% of the area of the liquid crystal layer 300 in an aspect of improvement of user's visibility and transmittance in a light transmissive mode.

According to the embodiment, the liquid crystal layer 300 may include the alignment film 400 as necessary. For example, the alignment film 400 may be formed on both surfaces of the liquid crystal layer 300 including liquid crystal compounds.

The alignment film 400 is not particularly limited as long as it adds alignment to the liquid crystal compounds, and preferably, may include photoalignment or photocurable polymers, etc. For example, the alignment film 400 may be formed by applying and curing alignment film coating compositions including photoalignment or photocurable polymers, photopolymerization initiators, and solvents.

The photoalignment or photocurable polymers are not particularly limited and may use cinnamate-based polymers, polyimide-based polymers, etc. For example, photoalignment or photocurable polymers may use poly(vinyl cinnamate)(PVCi), poly(siloxane cinnamate)(PSCN), poly(ω(4-chalconyloxy)alkoxyphenylmaleimide, 6-FDA-HAB-Cl, etc. and may use polymers currently developed or to be developed, the polymers being capable of providing alignment.

The variable transmittance optical stack of the present disclosure may include other members without affecting the objectives of the present disclosure and, for example, may include the pressure-sensitive adhesive/adhesive layer 600 (referring to FIGS. 2 to 4) and may include an ultraviolet ray absorption layer, a hard coating layer, etc.

The pressure-sensitive adhesive/adhesive layer 600 may be formed using an adhesive or a pressure-sensitive adhesive, and have appropriate pressure sensitive adhesion/adhesion to prevent peeling, bubbles, etc. from occurring when handling the optical stack, and preferably have transparency and thermal stability.

The adhesive may be an adhesive currently developed or to be developed, for example, may use photocurable adhesive.

The photocurable adhesive provides strong adhesion by being crosslinked and cured by receiving active energy rays such as ultraviolet (UV), electron beam (EB), etc., and may be composed of reactive oligomers, reactive monomers, a photopolymerization initiator, and the like.

The reactive oligomers are important components that determine the characteristics of adhesive, and form polymer binding by photopolymerization to form a cured film. For example, the available oligomers may be polyester-based resin, polyether-based resin, polyurethane-based resin, epoxy-based resin, polyacryl-based resin, silicon-based resin, and the like.

The reactive monomers may serve as crosslinker, diluent of the reactive oligomers described above, and affect adhesion characteristics. For example, the available reactive monomers may be monofunctional monomers, multifunctional monomers, epoxy-based monomers, vinyl ethers, cyclic ethers, and the like.

The photopolymerization initiator may absorb light energy to generate radicals or cations to initiate photopolymerization, and a proper type may be selected and used depending on photopolymerization resin.

The pressure-sensitive adhesive may use a pressure-sensitive adhesive currently developed or to be developed. According to one or a plurality of embodiments, as the pressure-sensitive adhesive, acryl-based pressure-sensitive adhesive, rubber-based pressure-sensitive adhesive, silicon-based pressure-sensitive adhesive, urethane-based pressure-sensitive adhesive, polyvinyl alcohol-based pressure-sensitive adhesive, polyvinyl pyrrolidone-based pressure sensitive adhesive, polyacrylamide-based pressure sensitive adhesive, cellulose-based pressure sensitive adhesive, vinylalky ether-based pressure sensitive adhesive and the like. The pressure-sensitive adhesive is not particularly limited as long as it has pressure-sensitive adhesion and viscoelasticity. For ease of acquisition, preferably, the pressure-sensitive adhesive may include acryl-based pressure-sensitive adhesive, for example, may be (meth)acrylate copolymers, crosslinkers, solvents, and the like.

The crosslinkers may be crosslinkers currently developed or to be developed and, for example, polyisocyanate compounds, epoxy resins, melamine resins, urea resins, dialdehydes, methylol polymers, etc., and may preferably contain polyisocyanate compounds.

The solvents may include common solvents used in the field of resin compositions. For example, the solvents may use solvents such as alcohol-based compounds such as methanol, ethanol, isopropanol, butanol, propylene glycol methoxy alcohol, and the like; ketone-based compounds such as methyl ethyl ketone, methyl butyl ketone, methyl isobutyl ketone, diethyl ketone, dipropyl ketone, and the like; acetate-based compounds such as methyl acetate, ethyl acetate, butyl acetate, propylene glycol methoxy acetate, and the like; cellosolve-based compounds such as methyl cellosolve, ethyl cellosolve, propyl cellosolve, etc.; hydrocarbon-based compounds such as hexane, heptane, benzene, toluene, xylene, and the like. The solvents may be used alone or combination of two or more types.

The thickness of the pressure-sensitive adhesive/adhesive layer 600 may be appropriately determined depending on a type of resins serving as the pressure sensitive adhesive/adhesive, the strength of the pressure sensitive adhesive/adhesive, the environment where the pressure sensitive adhesive/adhesive is used, and the like. According to an embodiment, the pressure-sensitive adhesive/adhesive layer may have a thickness ranging from 0.1 to 500µm in order to ensure sufficient adhesion and minimize the thickness of the optical stack and, preferably, may have a thickness ranging from 0.5 to 0450µm and, more preferably, may have a thickness ranging from 1 to 400µm.

According to the embodiment, the pressure-sensitive adhesive/adhesive layer 600 may be formed on one surface or both surfaces of the polarizing plate by the laminate method.

The ultraviolet ray absorption layer is not particularly limited as long as it is to prevent deterioration of the optical stack due to UV rays. For example, the ultraviolet ray absorption layer may use salicylic acid-based ultraviolet absorber (phenyl salicylate, p-tert-butyl salicylate, etc.), benzophenone-based ultraviolet absorber(2,4-dihydroxybenzophenone, 2,2'-dihydroxy-4,4'-dimethoxybenzophenone, etc.), benzotriazole-based ultraviolet absorber (2-(2'-hydroxy-5'-methylphenyl)benzotriazole, 2-(2'-hydroxy-3',5'-di-tert-butylphenyl)benzotriazole, 2-(2'-hydroxy-3'-tert-butyl-5'-methylphenyl)benzotriazole, 2-(2'-hydroxy-3',5'-di-tert-butylphenyl)-5-chlorobenzotriazole, 2-(2'-hydroxy-3'-(3",4",5",6"-tetrahydrophthalimide methyl)-5'-methylphenyl)benzotriazole, 2,2-methylenebis(4-(1,1,3,3-tetramethylbutyl)-6-(2H-benzotriazole-2-yl)phenol), 2-(2'-hydroxy-3'-tert-butyl-5'-methylphenyl)-5-chlorobenzotriazole, 2-(2'-hydroxy-3'-tert-butyl-5'-(2-octyloxicarbonylethyl)-phenyl)-5-chlorobenzotriazole, 2-(2'-hydroxy-3'-(1-methyl-1-phenylethyl)-5'-(1,1,3,3-tetramethylbutyl)-phenyl)benzotriazole, 2-(2H-benzotriazole-2-yl)-6-(linear and side chain dodecyl)-4-methylphenol, octyl-3-[3-tert-butyl-4-hydroxy-5-(chloro-2H-benzotriazole-2-yl)phenyl]propionate and 2-ethylhexyl-3-[3-tert-butyl-4-hydroxy-5-(5-chloro-2H-benzotriazole-2-yl)phenyl]propionate compounds, etc.), cyanoacrylate-based ultraviolet absorber(2'-ethylhexyl-2-cyano-3,3-diphenylacrylate, ethyl-2-cyano-3-(3',4'-methylene dioxyphenyl)-acrylate, etc.), triazine-based ultraviolet absorber, etc. The benzotriazole-based ultraviolet absorber or the triazine-based ultraviolet absorber that have high transparency and the excellent effect of preventing deterioration of the polarizing plate or the variable transmittance layer may be preferably used as the ultraviolet ray absorption layer, and the benzotriazole-based ultraviolet absorber having more appropriate spectral absorption spectroscopy absorption spectrum may be preferable. The benzotriazole-based ultraviolet absorber may be changed into "-Bis" and, for example, may be 6,6'-methylene bis (2-(2H-benzo[d][1,2,3]triazole-2-yl)-4-(2,4,4-trimethylpentane-2-yl)phenol), 6,6'-methylene bis (2-(2H-benzo[d][1,2,3]triazole-2-yl)-4-(2-hydroxyethyl)phenol), etc.

In addition to the variable transmittance optical stack, the present disclosure includes a smart window including the same. Furthermore, the present disclosure includes a vehicle in which the smart window is applied to at least one of front windows, rear windows, side windows, sunroof windows, and inner partitions, and a building window including the smart window.

For example, a vehicle including the smart window of the present disclosure may relate to a window in which a vehicle glass 700 is attached to both surfaces of the optical stack including the polarizing plate 100, the transparent conductive layer 200, the liquid crystal layer 300, the alignment film 400, the sealant 500, and the pressure-sensitive adhesive/adhesive layer 600 (referring to FIG. 2). For example, the window of a vehicle may be formed by placing an adhesive film and a vehicle glass on both surfaces of the optical stack, then heating the stack by using a press machine at 90°C temperature and an approximately 1bar vacuum state for 10 to 20 minutes. The adhesive film may include an EVA film, a PVB film, etc.

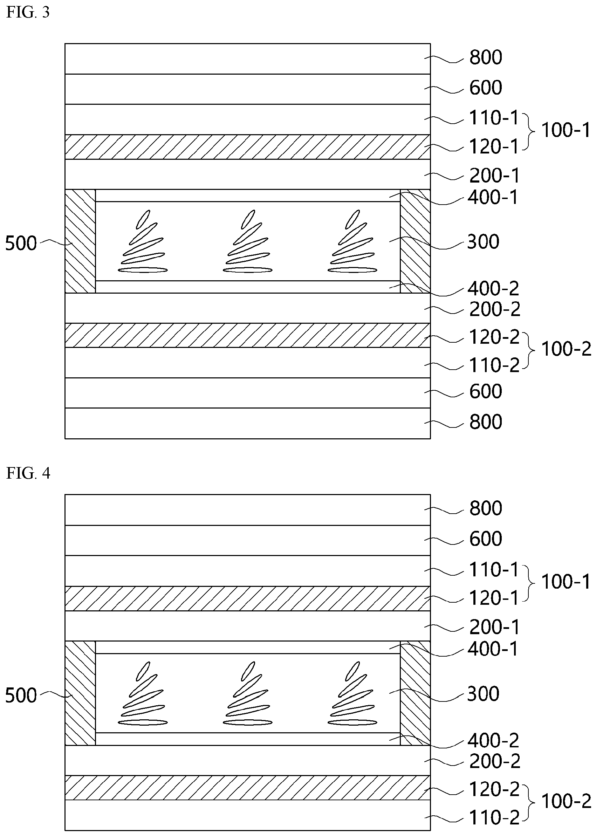

Furthermore, a building window and door (glass for windows and doors, 800) may be attached to both surfaces (referring to FIG. 3) or one surface (referring to FIG. 4) of the optical stack, and a smart window product for windows and doors having the same configuration as FIG. 3 may be formed by attaching the glass for windows and doors to both surfaces of the optical stack after applying a UV adhesive to the glass, then performing UV curing, and a smart window product for windows and doors having the same configuration as FIG. 4 may be manufactured by attaching the glass on one surface of the optical stack by the laminate method.

### Mode for Invention

Hereinbelow, an embodiment of the present disclosure will be described in detail. However, the present disclosure may not be limited to embodiments disclosed below and may be implemented in various shapes, and the embodiments merely ensure that the present disclosure is complete and is provided to fully inform those skilled in the art of the scope of the invention, and may be defined by the scope of the claims.

### Manufacturing example 1: manufacturing of polarizing plate

### (1) Swelling treatment process

A polyvinylalcohol film (material film)(manufactured by Kurarey Company, product name "Kuraray Poval Film VF-PE # 6000", average polymerization degree 2400, saponification degree 99.9 mol%) of a thickens of 60µm is returned while continuing to unroll the film from the material roll, and the film is immersed in a swelling bath added with pure water of 20°C for 30 seconds. In the swelling treatment process, stretching (vertical uniaxial stretching) between rolls is performed with adding a difference in main speed between nip rolls. Stretching magnification based on the material film is preset at 2.5 times.

### (2) Dyeing treatment process

Next, the film passing through the nip rolls is immersed in a dyeing bath at 30°C with a mass ratio of pure water/potassium iodide/iodine/boracic acid of 100/2/0.01/0.3 for 120 seconds. Also in the dyeing process, stretching between rolls (vertical uniaxial stretching) is performed while adding a difference in main speed between the nip rolls. Stretching magnification based on the film after the swelling treatment process is preset at 1.1 times.

### (3) Crosslinking treatment process

Next, the film passing through the nip rolls is immersed in a first crosslinking bath at 56°C with a mass ratio of pure water/potassium iodide/boracic acid of 100/12/4 for 70 seconds. Stretching between rolls (vertical uniaxial stretching) is performed while adding a difference in main speed between a nip roll and another nip roll provided between the first crosslinking bath and a second crosslinking bath. Stretching magnification based on the film after the dyeing treatment process is preset at 1.9 times.

### (4) Complementary color treatment process

Next, the film after the crosslinking treatment process is immersed in the second crosslinking bath at 40°C with a mass ratio of potassium iodide/boracic acid/pure water of 9/2.9/100 for 10 seconds.

### (5) Cleaning treatment process

Next, the film after the second crosslinking treatment process is immersed in a cleaning bath added with pure water at 14°C for 5 seconds, and cleaning the film with a cleaning amount of 5m³/h and a cleaning temperature of 14°C.

### (6) Drying treatment process

Next, the polarizer film is produced by heating-drying the film at 80°C for 190 seconds by passing the film after the cleaning treatment process through a dry passage. A moisture rate after drying is 13.6%, and a thickness of the obtained polarizer film is about 21µm.

### (7) Bonding treatment process

Next, as the adhesive, a water-based adhesive is prepared by including 5 parts by weight of polyvinylalcohol-based resin to 100 parts by weight of water. Thereafter, the protective film is stacked on both surfaces of the polarizer film by using the prepared UV adhesive. The upper polarizing plate and the lower polarizing plate are produced by performing UV exposure to the obtained stack and curing the adhesive. Furthermore, a thickness of the adhesive layer to the obtained polarizing plate is about 2µm.

### Manufacturing example 2: manufacturing of compositions for forming hard coating layer

The compositions for forming the hard coating layer are prepared by mixing dendrimer compounds (Miwon Specialty Chemical Company, SP-1106) 16.2g, inorganic nanoparticles (10 to 20nm, silica particles: 50 weight%, solvent: methylethylketone (MEK)) 14.4g, polyfunctional(meth)acrylate compounds 1.8g including an ethylene glycol group, photoinitiators (1-hydroxycyclohexylphenylketone) 0.7g, and methylethylketone 2.9g.

### Manufacturing example 3: manufacturing of hard coating layer

The compositions for forming the hard coating layer prepared in the manufacturing example 2 is Bar-coated on one surface of each of the upper polarizing plate and the lower polarizing plate manufactured in the manufacturing example 1 by adjusting and curing a Mayer Bar type and a solid content after calculating a hard coating thickness, and then being dried at 80°C for 5 minutes, cured with a light intensity of 500mJ/cm² in a high pressure mercury lamp, thereby manufacturing the upper polarizing plate and the lower polarizing plate each with the hard coating layer formed on one surface thereof.

### Manufacturing example 4: manufacturing of transparent conductive layer

The upper polarizing plate and the lower polarizing plate manufactured in the manufacturing examples 1 to 3 are inserted, and 450W DC power is applied to operate a sputter gun. Next, plasma is induced to an ITO (10wt% Sn doped In₂O₃) target to form a transparent conductive film (90nm). The formed transparent conductive film is ion-treated by operating an ion gun with 50W DC power. Herein, the transparent conductive film is manufactured by maintaining the pressure at 3mTorr at room temperature and supplying argon gas and oxygen gas at 30sccm and 1sccm respectively. At this point, the thickness of ITO is measured by a FT-SEM, and a ITO sheet resistance (Ω/□) is measured by a four-point probe.

### Manufacturing example 5: manufacturing of alignment film

An alignment solution is coated on an ITO surface of the upper polarizing plate and the lower polarizing plate manufactured in the manufacturing example 4 and dried (80°C/2 minutes). Thereafter, UV is incident on the dried alignment solution to manufacture the alignment film.

### Manufacturing example 6: manufacturing of spacer dispersion

First, a mixed solvent is produced by mixing a ball spacer (SEKISUI Co., ltd SP-210) of 0.03g based on IPA of 100ml. Thereafter, the conductive layer stack of the lower polarizing plate of the manufacturing example 5 is inserted into the spacer spreader (SDSS-KHU02, Shindo Company). The manufactured mixed solvent is spread under a condition of 110°C and then is dried for 20 minutes to form the ball spacer on the alignment film of the lower polarizing plate.

### Manufacturing example 7: manufacturing of optical stack

A sealant (UVF-006, 70,000 mPa s, SEKISUI Company) is applied on an outer circumferential surface of the lower polarizing plate manufactured in the manufacturing example 6 by using the sealant dispenser (SHOTmini 200Ωx, MUSASHI Company) according to a product size. Thereafter, while the transmission shafts of the upper polarizing plate and the lower polarizing plate are arranged at 0° or 90° in parallel to each other, a liquid crystal is injected into the alignment film of the upper polarizing plate in an ODF process method ODF, and the upper polarizing plate and the lower polarizing plate are bonded to each other. Thereafter, UV curing (500mJ/cm²) is performed along a sealant line to manufacture the optical stack for the smart window.

### Examples and comparative examples

### Example 1

According to the manufacturing examples 1 to 7, the optical stack of example 1 is manufactured with the thickness of the upper hard coating layer provided in the upper polarizing plate of 2µm and the thickness of the lower hard coating layer provided in the lower polarizing plate of 2µm. At this point, the outer and inner protective films of the upper polarizing plate are a TAC film having a thickness of 60µm and a TAC film having a thickness of 40µm, respectively. The outer and inner protective films of the lower polarizing plate are TAC films each having a thickness of 40µm, respectively.

### Example 2

According to the manufacturing examples 1 to 7, the optical stack of example 2 is manufactured with the thickness of the upper hard coating layer provided in the upper polarizing plate of 5µm and the thickness of the lower hard coating layer provided in the lower polarizing plate of 5µm. At this point, the outer and inner protective films of the upper polarizing plate are a TAC film having a thickness of 60µm and a TAC film having a thickness of 40µm, respectively. The outer and inner protective films of the lower polarizing plate are TAC films each having a thickness of 40µm, respectively.

### Example 3

According to the manufacturing examples 1 to 7, the optical stack of example 3 is manufactured with the thickness of the upper hard coating layer provided in the upper polarizing plate of 20µm and the thickness of the lower hard coating layer provided in the lower polarizing plate of 20µm. At this point, the outer and inner protective films of the upper polarizing plate are a TAC film having a thickness of 60µm and a TAC film having a thickness of 40µm, respectively. The outer and inner protective films of the lower polarizing plate are TAC films each having a thickness of 40µm.

### Example 4

According to the manufacturing examples 1 to 7, the optical stack of example 4 is manufactured with the thickness of the upper hard coating layer provided in the upper polarizing plate of 2µm and the thickness of the lower hard coating layer provided in the lower polarizing plate of 2µm. At this point, the outer and inner protective films of the upper polarizing plate are a TAC film having a thickness of 60µm and a COP film having a thickness of 50µm, respectively. The outer and inner protective films of the lower polarizing plate are a TAC film having a thickness of 40µm and a COP film having a thickness of 50µm, respectively.

### Example 5

According to the manufacturing examples 1 to 7, the optical stack of example 5 is manufactured with the thickness of the upper hard coating layer provided in the upper polarizing plate of 5 µm and the thickness of the lower hard coating layer provided in the lower polarizing plate of 5µm. At this point, the outer and inner protective films of the upper polarizing plate are a TAC film having a thickness of 60µm and a COP film having a thickness of 50µm, respectively. The outer and inner protective films of the lower polarizing plate are a TAC film having a thickness of 40µm and a COP film having a thickness of 50µm, respectively.

### Example 6

According to the manufacturing examples 1 to 7, the optical stack of example 6 is manufactured with the thickness of the upper hard coating layer provided in the upper polarizing plate of 20µm and the thickness of the lower hard coating layer provided in the lower polarizing plate of 20µm. At this point, the outer and inner protective films of the upper polarizing plate are a TAC film having a thickness of 60µm and a COP film having a thickness of 50µm, respectively. The outer and inner protective films of the lower polarizing plate are a TAC film having a thickness of 40µm and a COP film having a thickness of 50µm, respectively.

### Comparative example 1

According to the manufacturing examples 1 to 7, the optical stack of comparative example 1 is manufactured with the upper hard coating layer having a thickness of 14µm that is provided only on one surface of the upper polarizing plate. At this point, the outer and inner protective films of the upper polarizing plate are a TAC film having a thickness of 60µm and a TAC film having a thickness of 40µm, respectively. The outer and inner protective films of the lower polarizing plate are a TAC film having a thickness of 40µm and a COP film having a thickness of 50µm, respectively.

### Comparative example 2

According to the manufacturing examples 1 and 4 to 7, the optical stack of comparative example 2 is manufactured with the upper polarizing plate and the lower polarizing plate without the hard coating layer. At this point, the outer and inner protective films of the upper polarizing plate are a TAC film having a thickness of 80µm and a COP film having a thickness of 50µm, respectively. The outer and inner protective films of the lower polarizing plate are a TAC film having a thickness of 80µm and a COP film having a thickness of 50µm, respectively.

### Comparative example 3

A heat-curing alignment film is applied in the manufacturing of the alignment film, except the manufacturing is performed at a curing condition (110°C, 30 minutes), the optical stack of comparative example 3 in which each of the upper polarizing plate and the lower polarizing plate does not include the hard coating layer is manufactured. At this point, the outer and inner protective films of the upper polarizing plate are a TAC film having a thickness of 60µm and a COP film having a thickness of 50µm, respectively. The outer and inner protective films of the lower polarizing plate are a TAC film having a thickness of 40µm and a COP film having a thickness of 50µm, respectively.

### Experimental examples

### (1) Pencil hardness evaluation

For the optical stacks of the examples 1 to 6 and the comparative examples 1 to 3, pencil hardness of the hard coating layer surface (or inner surface of the polarizing plate) of the polarizing plate is measured by applying a load of 500g by using the pencil hardness tester (Pencil Hardness Tester, Korea Sukbo Scientific Co.). The measured results are indicated in Tables 1 and 2. The pencil is a product of Mitsubishi, tests are conducted 5 times per one type of pencil hardness, thermal treatment is performed at 100°C for 10 minutes, and the pencil hardness is measured based on whether scratches occur.

### (2) Reliability mandrel evaluation

For the optical stacks of the examples 1 to 6 and the comparative examples 1 to 3, in order to evaluate bending and crack properties through the cylindrical bending tester (Lab-Q D605, CKSI Co.), specimens according to the examples and the comparative examples as a size of 100 x 100mm are placed such that each lower polarizing plate is brought into contact with a metal rod with a diameter of 4mm, and while each specimen is folded, a load of 1 kg is applied to an outer side of the folded portion, each specimen is inserted into an oven at 90°C for 2 h and then left at room temperature, the observed region is observed to determine whether cracks occur, and the determined results are indicated in Tables 1 and 2.

### <Evaluation criteria>

good: no crack
bad: one or more cracks

### (3) Steel wool test

For the optical stacks of the examples 1 to 6 and the comparative examples 1 to 3, using a steel wool tester (WT-LCM100, manufactured by Korea Protec), abrasion resistance of the hard coating layer surface of the polarizing plate is evaluated by reciprocating the optical stack 10 times at 1kg/ (2cm x 2cm) and a speed of 100mm/sec, and the evaluated results are indicated in Tables 1 and 2. Steel wool is #0000.

### <Evaluation criteria>

○: without scratch and discoloration
△: with one to 10 scratches and without discoloration
X: with scratches more than 10 and discoloration

**[Table 1]**

| | Example 1 | Example 2 | Example 3 | Example 4 | Example 5 | Example 6 |
|---|---|---|---|---|---|---|
| Hard coating layer pencil hardness (upper/lower) | 3B/3B | HB/HB | 6H/6H | 3B/3B | HB/HB | 6H/6H |
| Reliability mandrel evaluation | good | good | good | good | good | good |
| Steel wool test | Δ | ○ | ○ | Δ | ○ | ○ |

**[Table 2]**

| | Comparative example 1 | Comparative example 2 | Comparative example 3 |
|---|---|---|---|
| Hard coating layer ¹⁾ pencil hardness (upper/lower) | 4H/6B | 6B/6B | 6B/6B |
| Reliability mandrel evaluation | bad | bad | bad |
| Steel wool test | X | X | X |

| | | | |
|---|---|---|---|
| 1) In the case of the polarizing plate without the hard coating layer, pencil hardness of the inner side surface of the polarizing plate is measured. | | | |

Referring to Tables 1 and 2, in the case of the optical stacks of the examples 1 to 6 in which the pencil hardness of the upper and lower hard coating layers is 3B to 6H, no crack occurs in the reliability mandrel evaluation results, and in the steel wool test results, no scratch or less than 10 scratches occur, and no discoloration occurs.

Specification, in the case of the optical stacks of the examples 2, 3, 5, and 6 in which the pencil hardness of the upper and lower hard coating layers is HB to 6H, in comparison to the optical stacks of the examples 1 and 4, the results of the reliability mandrel evaluation and the steel wool test are more excellent.

Meanwhile, in the case of the optical stacks of the comparative example 1 in which the hard coating layer is provided only in the upper polarizing plate, and of the comparative examples 2 and 3 in which the hard coating layer is not provided, the results of the reliability mandrel evaluation and the steel wool test are bad compared to the examples.

Therefore, two different polarizing plates included in the optical stack include respective functional layers, i.e., respective hard coating layers, and when the surface pencil hardness of each hard coating layer is 3B to 6H, more particularly, HB to 6H, abrasion resistance is excellent, and bending resistance and durability are improved.

### Industrial Application

For the variable transmittance optical stack according to the present disclosure, the process in which a conductive layer is formed on a substrate and is bonded to other members to manufacture the conventional optical stack may be omitted, so the manufacturing process of the present disclosure can be simplified compared to the conventional optical stack.

## Claims

1. A variable transmittance optical stack comprising:
a first polarizing plate comprising a first functional layer;
a first transparent conductive layer formed on one surface of the first polarizing plate;
a second polarizing plate comprising a second functional layer and opposite to the first polarizing plate;
a second transparent conductive layer formed on one surface of the second polarizing plate and opposite to the first transparent conductive layer; and
a liquid crystal layer provided between the first transparent conductive layer and the second transparent conductive layer,
wherein at least one of the first transparent conductive layer and the second transparent conductive layer is formed in direct contact with one of the first polarizing plate and the second polarizing plate, and
each of the first and second functional layers has surface pencil hardness ranging from 3B to 6H.

2. The variable transmittance optical stack of claim 1, wherein each of the first and second functional layers has surface pencil hardness ranging from HB to 6H.

3. The variable transmittance optical stack of claim 1, wherein each of the first and second functional layers comprises at least one of a hard coating layer and a low refractive index layer.

4. The variable transmittance optical stack of claim 3, wherein the low refractive index layer comprises one or more selected from a group consisting of SiO₂, Al₂O₃, MgF₂, CaF₂, and cryolite.

5. The variable transmittance optical stack of claim 1, wherein at least one of the first transparent conductive layer and the second transparent conductive layer is formed in direct contact with one of the first polarizing plate and the second polarizing plate without an additional substrate between the transparent conductive layer and the polarizing plate.

6. The variable transmittance optical stack of claim 1, wherein at least one of the first transparent conductive layer and the second transparent conductive layer is formed in direct contact with one of the first polarizing plate and the second polarizing plate with a highly adhesive layer between the transparent conductive layer and the polarizing plate.

7. The variable transmittance optical stack of claim 1, wherein at least one of the first transparent conductive layer and the second transparent conductive layer comprises one or more selected from a group consisting of a transparent conductive oxide, metal, carbonaceous material, conductive polymer, conductive ink, and nanowires.

8. The variable transmittance optical stack of claim 1, wherein at least one of the first polarizing plate and the second polarizing plate further comprises one or more selected from a group consisting of a protective layer, a retardation matching layer, and a refractive index matching layer.

9. The variable transmittance optical stack of claim 1, wherein at least one of the first polarizing plate and the second polarizing plate has a thickness ranging from 30 to 200µm.

10. The variable transmittance optical stack of claim 1, wherein the liquid crystal layer comprises one or more of spacers selected from a group consisting of a ball spacer and a column spacer.

11. The variable transmittance optical stack of claim 10, wherein the spacer has a diameter ranging from 1 to 10µm.

12. The variable transmittance optical stack of claim 10, wherein an occupancy area of the spacer in the liquid crystal layer ranges from 0.01% to 10% of the area of the liquid crystal layer.

13. The variable transmittance optical stack of claim 1, further comprising:
one or more selected from a group consisting of an alignment film, a pressure-sensitive adhesive/adhesive layer, and an ultraviolet ray absorption layer.

14. A method for manufacturing the variable transmittance optical stack of any one of claims 1 to 13.

15. A smart window comprising the variable transmittance optical stack of any one of claims 1 to 13.

16. A transportation means comprising the smart window of claim 15.

17. A vehicle in which the smart window of claim 15 is applied to at least one of a front window, a rear window, a side window, a sunroof window, and an inner partition thereof.

18. A wearable device comprising the smart window of claim 15.

19. Windows and doors for a building, the windows and doors comprising the smart window of claim 15.
